# EUROPÄISCHE PATENTANMELDUNG

(11) **EP 2 113 535 A1**
(43) Veröffentlichungstag der Anmeldung: **04.11.2009**
(21) Anmeldenummer: 08008285.2
(22) Anmeldetag: 30.04.2008
(51) Int. Cl.: C08L 77/06, C08G 69/26

(54) **Polyamidformmassen, enthaltend Copolyamide, zur Herstellung von transparenten Formteilen mit geringem Verzug im Klimatest**

(71) Anmelder: EMS-PATENT AG, 7013 Domat/Ems (CH)
(72) Erfinder: Bühler, Friedrich Severin, Dr., 7430 Thusis (CH); Aepli, Etienne, 7013 Domat/Ems (CH); Bass, Sepp, 7013 Domat/Ems (CH)
(74) Vertreter: Becker Kurig Straus

(57) **Zusammenfassung**

Polyamidformmassen auf Basis von transparenten Copolyamiden zur Herstellung von transparenten oder einfärbbaren Formteilen mit hoher Zähigkeit, niedriger Wasseraufnahme und geringem Verzug im Klimatest, enthaltend
(A) 40 bis 100 Gew.-% mindestens eines transparenten Copolyamids mit einer Glasübergangstemperatur (T_{g}) von wenigstes 80°C und höchstens 150°C aufgebaut aus
- mindestens zwei voneinander verschiedenen Diaminen, ausgewählt aus der Gruppe, bestehend aus aliphatischen und cycloaliphatischen Diaminen, insbesondere mit 6 bis 36 Kohlenstoffatomen,

wobei die Konzentration an cycloaliphatischem Diamin mindestens 40 Mol-% und die Konzentration an aliphatischem Diamin mindestens 10 Mol-%, jeweils bezogen auf den Gesamtdiamingehalt, beträgt, sowie
- aus einer oder mehreren aliphatischen Dicarbonsäuren, insbesondere mit 6 bis 36 Kohlenstoffatomen,

(B) 0 bis 60 Gew.-% mindestens eines weiteren Polymeren, ausgewählt aus der Gruppe, bestehend aus amorphen oder teilkristallinen Homo- oder Copolyamiden, Polyetheresteramiden, Polyetheramiden, Polyesteramiden oder deren Gemischen,
(C) 0 bis 10 Gew.-% übliche Additive, ausgewählt aus der Gruppe, bestehend aus UV-Stabilisatoren, Hitzestabilisatoren, Radikalfängern und/oder Verarbeitungshilfsstoffen, Einschlussverhinderern, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon,

wobei die Summe der Komponenten (A), (B) und (C) 100 Gew.-% ergibt.

## Beschreibung

### Technisches Gebiet

Die Erfindung betrifft Formmassen auf der Basis von transparenten Copolyamiden, die zur Herstellung von transparenten oder eingefärbten Formteilen mit hohen technischen Anforderungen und hochwertigen Oberflächen, insbesondere im Sichtbereich, eingesetzt werden. Die erfindungsgemäßen Formmassen zeichnen sich weiter durch hohe Zähigkeit, niedrige Wasseraufnahme und geringen Verzug im Klimatest (siehe weiter unten) aus. Insbesondere betrifft die vorliegende Erfindung neue Polyamidformmassen auf Basis von transparenten Copolyamiden, die überwiegend auf Monomeren basieren, die aus nachwachsenden oder erneuerbaren Rohstoffen zugänglich sind. Die vorliegende Erfindung betrifft ebenfalls ein Verfahren zur Herstellung der Polyamidformmassen und aus den Formmassen hergestellte Formteile, wie z. B. Gehäuse- oder Displaymaterial für Mobiltelefone, GPS-Geräte, MP3-Player, Brillen, Linsen, Kameras, optische Geräte und Ferngläser.

Besonders bevorzugt bestehen die erfindungsgemäßen Formmassen bzw. die enthaltenen Copolyamide aus mindestens 50 Gew.-% Bioanteil nach ASTM D6866-06a (Bioanteil, dort als biobased content bezeichnet, vgl. z. B. Kap. 3.3.9, Maß für den Anteil an nicht-fossilem, d. h. nachwachsendem Kohlenstoff, vgl. auch Kap. 17). Der Bioanteil wird dabei aus dem Verhältnis der Kohlenstoffisotope C₁₂ und C₁₄ abgeleitet. Da sich dieses Verhältnis bei fossilen und nachwachsenden Rohstoffen deutlich unterscheidet, kann der Bioanteil an den erfindungsgemäßen Polyamidformmassen messtechnisch einfach als eindeutig produktcharakterisierende Eigenschaft nachgewiesen werden.

Hochwertige Oberflächen werden als Unterstützung einer "High End Quality" Positionierung von Autoausstattungen, Haushaltsgeräten, Unterhaltungselektronik, Sportgeräten und leicht zu reinigenden Industrie-Oberflächen eingesetzt. Dazu werden hohe Ansprüche an den Werkstoff gestellt, der neben dem hochwertigen Aussehen bruchsicher, fließfähig, dehnfähig und verzugsarm sein muss. Das erfordert geringe Volumenänderungen durch Kristallisation und geringe Feuchte-Aufnahme. Ferner wird eine ausgezeichnete Abriebfestigkeit und dynamische Belastbarkeit verlangt, was typische Eigenschaften von dehnfähigen Polyamiden sind. Formteile aus den erfindungsgemäßen Polyamidformmassen besitzen daher eine ausgezeichnete Transparenz, Zähigkeit und Abriebfestigkeit. Hohe chemische Resistenz und hohe Belastbarkeit bei Wechselbiegebeanspruchung erlauben diesen Formteilen Einsätze in robuster Umgebung.

Die erfindungsgemäßen Formmassen können auf bekannten Verarbeitungsanlagen nach bekannten Verfahren zu hochwertigen Formteilen verarbeitet werden. Hochwertige Formteile können, wie schon oben erläutert, als Gehäuse- oder Displaymaterial für Mobiltelefone, GPS-Geräte, MP3-Player, Brillen, Linsen, Kameras, optische Geräte, Ferngläser etc. eingesetzt werden.

Anwender, die sich z. B. nach der Normengruppe ISO 14000 zertifizieren lassen wollen, verpflichten sich zum nachhaltigen Wirtschaften. Sie erstellen beispielsweise Lebenszyklusanalysen (Life cycle assessment, LCA) über die CO₂-Bilanz von Produkten. Dazu trägt eine kurze Zeitspanne zwischen Freisetzung von CO₂ (Quelle) und erneute Immobilisierung (Senke) bei, wie sie durch die erfindungsgemäße Verwendung biologisch nachwachsender Rohstoffe mit den angegebenen Werten für den Bioanteil möglich ist. Der Fachmann steht somit vor dem Problem, ökologisch vorteilhafte Werkstoffe einsetzen zu müssen, die bisher mit nachteiligen Werkstoffeigenschaften verbunden waren. Die Erfindung stellt in einer Ausführungsform insofern eine Lehre zur Überwindung dieses Problems dar, da sie also überraschenderweise ein unerwartet hochwertiges transparentes Copolyamid als Werkstoff zur Verfügung stellt, welches dennoch ökologisch im wesentlichen unbedenklich ist, weil es weitgehend aus nachwachsenden oder erneuerbaren Rohstoffen aufgebaut ist.

### Stand der Technik

Die Ausgangsverbindungen bzw. Monomere für Kunststoffe werden heute im allgemeinen aus fossilen Quellen (Erdöl) gewonnen. Allerdings sind diese Ressourcen begrenzt, so dass Ersatzstoffe gesucht werden. Daher steigt das Interesse an nachwachsenden Rohstoffen, die zur Herstellung von "Biokunststoffen" oder Kunststoffen mit einem hohen Bioanteil verwendet werden können. Durch den chemischen Prozess des Crackens und die erneute Polymerisation ist man heute in der Lage, Molekülketten herzustellen, die vergleichbare Eigenschaften besitzen können, wie jene auf Erdölbasis. Mögliche Ausgangspflanzen sind z. B. Pflanzen, die Pflanzenöle wie z. B. Rizinusöl, Tallölfettsäuren sowie Öl-, Linol- oder Linolensäure produzieren. Erucasäure wird z. B. aus den Samen von Raps, Senf, Goldlack oder Kresse gewonnen.

Aufgrund der vor allem weltweit steigenden Erdölpreise und des Energiehungers, aber auch aufgrund der politischen Instabilität in den Förderländern, werden daher nachwachsende Rohstoffe auch für die Kunststoffbranche zu einer echten Alternative.

Aufgrund ihrer positiven Eigenschaften stellen Biokunststoffe in vielen Bereichen eine echte Alternative zu herkömmlichen, fossilen Kunststoffen dar. Polyamide mit Bioanteilen über 50% sind daher denkbar. Es handelt sich aber dann um teilkristalline Polyamide mit Glasübergangstemperaturen von kleiner 80°C, die zudem nicht transparent sind. Heutzutage werden zwar immer noch typische Vertreter von teilkristallinen Polyamiden wie Polyamid 6, Polyamid 11, Polyamid 66, Polyamid 69, Polyamid 610 etc. auf Basis von erdölbasierenden Monomeren hergestellt. Theoretisch ist es aber möglich, hier einen Bioanteil von nahezu 100% zu erzielen.

Unabhängig von der Rohstoffbasis müssen die transparenten Polyamidformmassen aber dennoch die hohen Anforderungen der Kunden erfüllen, d. h. neben sehr guten optischen Eigenschaften müssen die mechanischen Eigenschaften und die Chemikalienbeständigkeit auf hohem Niveau liegen. Darüber hinaus muss auch ein spezifizierter Klimatest bestanden werden (siehe weiter unten).

DE 43 10 970 A1 beschreibt transparente, amorphe Polyamidformmassen mit guter Spannungsrissbeständigkeit und Schlagzähigkeit sowie guter Beständigkeit gegen Alkohole, Ester, Ketone und kochendes Wasser, welche durch Polykondensation von aliphatischen Dicarbonsäuren mit trans, trans-Bis-(4-aminocyclohexyl)-methan (PACM) und gegebenenfalls anderen Diaminen erhalten wurden. Die gearbeiteten Beispiele der DE 43 10 970 A1 beziehen sich jedoch ausschließlich auf die Homopolyamide PACM10 und PACM12. Für theoretisch mögliche Copolyamide mit einem zweiten vom ersten Diamin unterschiedlichen Diamin werden aber überhaupt keine Diamin-Zusammensetzungen angegeben und damit auch keine Hinweise gegeben, dass diese theoretischen Zusammensetzungen vorteilhafte Eigenschaften aufweisen könnten.

DE 100 09 756 A1 beschreibt Polyamid-Mischungen mit verbesserter Transparenz und Chemikalienbeständigkeit ohne Einbußen in den mechanischen Eigenschaften. Die Mischungen bestehen aus amorphen oder mikrokristallinen Polyamiden und aus teilkristallinen Polyamiden sowie zwei verschiedenen Phosphoradditiven. Die für das amorphe oder mikrokristalline Polyamid angegebene Formel ermöglicht eine große Vielfalt an Kombinationsmöglichkeiten von Diaminen und aliphatischen Dicarbonsäuren als Ausgangskomponenten. Eine spezifische Kombination zweier unterschiedlicher Diamine, geschweige denn eine spezifische Zusammensetzung mit besonderen Eigenschaften (wie z. B. PA MACM10/1010) wird jedoch nicht beschrieben. In den Beispielen werden amorphe Polyamide auf Basis immer nur eines Diamins, dem Bis-(4-amino-3-methyl-cyclohexyl)-methan (MACM), in Kombination mit einer aromatischen Dicarbonsäure, der Isophthalsäure (IPS), und Lactam-12 dargestellt.

### Darstellung der Erfindung

Der Erfindung liegt demnach die Aufgabe zugrunde, Formmassen auf Basis von transparenten Copolyamiden bereit zu stellen, die zur Herstellung von transparenten oder eingefärbten Formteilen mit hohen technischen Anforderungen und hochwertigen Oberflächen, insbesondere im Sichtbereich, eingesetzt werden können, die aber nicht die für die Verarbeitung unvorteilhaft hohen Glasübergangstemperaturen der bekannten transparenten Homopolyamide aufweisen. Die Formmassen sollen sich durch hohe Zähigkeit, niedrige Wasseraufnahme, geringen Verzug im Klimatest und eine verbesserte Verarbeitbarkeit, insbesondere im Spritzguss, auszeichnen. Desweiteren soll es möglich sein, den Werkstoff auf Basis von nachwachsenden Rohstoffen basieren zu lassen.

Diese Aufgabe wird erfindungsgemäß gelöst durch die Polyamidformmassen gemäß Anspruch 1, enthaltend
(A)40 bis 100 Gew.-% mindestens eines transparenten Copolyamids mit einer Glasübergangstemperatur von wenigstens 80°C und höchstens 150°C, aufgebaut aus
   mindestens zwei voneinander verschiedenen Diaminen, ausgewählt aus der Gruppe, bestehend aus aliphatischen und cycloaliphatischen Diaminen, insbesondere mit 6 bis 36 Kohlenstoffatomen, wobei die Konzentration an cycloaliphatischem Diamin mindestens 40 Mol-% und die Konzentration an aliphatischem Diamin mindestens 10 Mol-%, jeweils bezogen auf den Gesamtdiamingehalt, beträgt, sowie
   - aus einer oder mehreren aliphatischen Dicarbonsäuren, insbesondere mit 6 bis 36 Kohlenstoffatomen,
(B)0 bis 60 Gew.-% mindestens eines weiteren Polymeren, ausgewählt aus der Gruppe, bestehend aus amorphen oder teilkristallinen Homo- oder Copolyamiden, Polyetheresteramiden, Polyetheramiden, Polyesteramiden oder deren Gemischen,
(C)0 bis 10 Gew.-% übliche Additive, ausgewählt aus der Gruppe, bestehend aus UV-Stabilisatoren, Hitzestabilisatoren, Radikalfängern und/oder Verarbeitungshilfsstoffen, Einschlussverhinderern, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon,
wobei die Summe der Komponenten (A), (B) und (C) 100 Gew.-% ergibt.

Diese Aufgabe wird weiterhin gelöst durch das Verfahren gemäß Anspruch 14 zur Herstellung der Polyamidformmassen, wobei die Herstellung der Polymerkomponenten (A) und (B) in bekannten Druckgefäßen erfolgt, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A), und gegebenenfalls (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie z. B. Verarbeitungsstabilisatoren, Farbpigmente, UV-Absorber, Hitzestabilisatoren, Flammschutzmittel und andere transparente Polyamide oder Polyamid 12.

Diese Aufgabe wird schließlich gelöst durch die Formteile gemäß den Ansprüchen 14 bis 17, erhältlich aus den Polyamidformmassen gemäß einem der Ansprüche 1 bis 12 mittels Spritzgießverfahren und Spritzprägeverfahren bei Massetemperaturen von 230°C bis 320°C,
wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

In den Unteransprüchen sind vorteilhafte Ausführungsformen der Erfindung enthalten.

Die erfindungsgemäßen Formmassen weisen in einer bevorzugten Ausführungsform einen Bioanteil gemäß ASTM D6866-06 von wenigstens 50% und eine Glasübergangstemperatur von größer 80°C auf. Die Transparenz einer aus der transparenten Formmasse hergestellten Platte mit Dicke von 2mm, gemessen als Lichttransmission gemäß ASTM D 1003, beträgt über 85% und der Haze (Trübung) maximal 10%. Für die angestrebte Verwendung der erfindungsgemäßen Formmassen werden hohe Steifigkeiten (Zug-E-Modul größer 1300 MPa) und hohe Zähigkeiten (Schlagzähigkeit bei 23°C: ohne Bruch) erzielt. Weiterhin wird ein geringer Verzug im Klimatest mit den aus den erfindungsgemäßen Formmassen hergestellten Formkörpern erzielt. Dabei beträgt die Durchbiegung einer Platte der Dimension 100 x 100 x 2mm unter Eigenlast im Klimatext (55°C / 95% relative Feuchte / Dauer: 168 h) höchsten 8mm, bevorzugt höchstens 5mm und ganz besonders bevorzug höchstens 3mm, wenn die Durchbiegung in der Mitte der Platte gemessen wird.

Als Monomere mit natürlicher Rohstoffbasis stehen heute nur aliphatische Monomere zur Verfügung. Sie müssen mit cycloaliphatischen, aromatischen oder verzweigten Monomerbausteinen kombiniert werden, um transparente Produkte zu erhalten. Der geforderte Bioanteil von wenigstens 50% verlangt aber hohe Mengen an aliphatischen Anteilen, wodurch zum einen die Glasübergangstemperatur (T_{g}), die Steifigkeit und die Lichttransmission (als Maß für die Transparenz) herabgesetzt und zum anderen die Trübung (Haze) erhöht wird. Hier sei beispielhaft eine Zusammensetzung des Typs PA10I/1010 genannt, die einen Bioanteil über 50% aufweist. Mit hohen Konzentration des Systems 10I (I = Isophthalsäure) wird ein Tg von größer 80°C erreicht, die Transparenz überschreitet 90%, der Haze liegt aber mit 20% außerhalb des für hochwertige optische Anwendungen tolerierbaren Bereiches.

Zusammensetzungen des Typs MACM10/1010 oder MACM14/1014 mit einem Bioanteil von über 50% sind ebenfalls bevorzugte Vertreter dieses Copolyamidtyps. Die Transparenz ist sehr gut, der Haze akzeptabel. Der erreichbare T_{g} liegt im erfindungsgemäßen Zusammensetzungsbereich über 80°C.

Überraschenderweise wurde durch die Erfinder der vorliegenden Anmeldung festgestellt, dass die Copolyamide MACM 6-36 / 6-36 6-36, bevorzugt die Copolyamide MACM 9-18 /9-14 9-18, insbesondere die Copolyamide MACM 9-18 / 10 9-18 die gewünschten Eigenschaften aufweisen. Beispielsweise haben die Copolyamide MACM10/1010 mit einem MACM10-Anteil zwischen 66 und 46 Mol-% eine Glasübergangstemperatur von wenigstes 89°C und der Bioanteil liegt zwischen 50 und 75%. Der Haze, gemessen an Platten der Dicke 2mm, liegt unter 5%, die Transmissionswerte liegen mit über 93% auf einem hohem Niveau. Der Glanz, gemessen unter einem Winkel von 20°, erreicht Höchstwerte mit ca. 150%. In hochtransparenten Materialien steigen die Glanzwerte über 100%, da die untere Oberfläche ebenfalls Licht reflektiert, das zur oberen Oberfläche hinzuaddiert wird.

Der Wert der Lichttransmission, welche als Maß für die Transparenz verwendet wird, ist dabei im Rahmen der vorliegenden Anmeldung stets als bestimmt nach der Methode ASTM D 1003 (Lichtart CIE-C) zu verstehen. Die Messung der Lichttransmission wurde dabei in den unten angeführten Experimenten auf einem Gerät mit dem Namen Haze Guard Plus der Firma BYK Gardner (DE) an Rundplatten 70 x 2mm oder Platten der Dimension 60 x 60 x 2mm durchgeführt. Der Transmissionswert wird für den sichtbaren Wellenlängenbereich definiert nach CIE-C d. h. mit wesentlichen Intensitäten ca. zwischen 400 und 770nm, angegeben. Die Rundplatten 70 x 2mm werden z. B. dafür auf einer Arburg Spritzgussmaschine im polierten Werkzeug hergestellt, wobei die Zylindertemperatur zwischen 200°C und 340°C und die Werkzeugtemperatur zwischen 20°C und 140°C liegt.

Transparente Polyamide oder Copolyamide weisen somit die hier definierte Lichttransmission auf und besitzen entweder eine amorphe oder mikrokristalline Morphologie. Bevorzugtermassen handelt es sich bei mikrokristallinen Polyamiden oder Copolyamiden um Polyamid-Systeme, welche, in hochmolekularer Form und ohne weitere Bestandteile verarbeitet, transparente Formteile ergeben, d. h. die Dimension der Kristallite ist unterhalb der Wellenlänge des sichtbaren Lichtes.

Die aus den erfindungsgemäßen, unverstärkten Formmassen hergestellten Formteile zeigen Steifigkeiten mit E-Moduli von 1300 bis 2000 MPa, bevorzugt mit E-Moduli von 1500 bis 2000 MPa. Die Prüfkörper zur Messung der Schlagwerte nach Charpy blieben bei Raumtemperatur (23°C) und bei -30°C ohne Bruch.

Bevorzugtermaßen beruht die Polyamidkomponente (A) zu mehr als 50% auf nachwachsenden Rohstoffen. Dies wird erreicht, indem hauptsächlich Monomere, wie z. B. Azelainsäure, Sebacinsäure, Tetradecandisäure, C₃₆-Dimerfettsäure, Aminoundecansäure, Nonandiamin, Decandiamin und Tetradecandiamin, zum Einsatz kommen, die aus diversen Pflanzenölen gewonnen werden.

Ein für die Monomerherstellung wichtiges Pflanzenöl ist das Rizinusöl, das aus dem Samen des afrikanischen Wunderbaumes (Rizinus Communis) gewonnen wird. Das Rizinusöl besteht zu 80 bis 90% aus dem Triglyzerid der Rizinolsäure sowie aus weiteren Glyceriden verschiedener C₁₈-Fettsäuren. Seit Jahrtausenden wird Rizinusöl bereits als Heilmittel verwendet, es findet aber auch seit langem bei technischen Ölen, Kosmetika, Beschichtungen und Hydraulikölen Einsatz. Die Sebacinsäure wird durch alkalische Spaltung von Rizinusöl bei hohen Temperaturen und nachfolgender Behandlung mit Salzsäure erhalten. Aus dem Methylester der Rizinussäure wird durch pyrolytische Zersetzung Heptaldehyd und Methyl-10-undecensäureester gewonnen, wobei letzterer über mehrere Reaktionsstufen in die 11-Aminoundecansäure überführt wird.

Azelainsäure und Brassilsäure basieren ebenfalls auf natürlichen Rohstoffen, sie werden durch Ozonolyse der Öl- bzw. Erucasäure hergestellt. Die Erucasäure wird aus dem Samen von Raps, Senf, Goldlack oder Kresse gewonnen.

Die C₃₆-Dimersäuren werden durch thermische Dimerisierung von ungesättigten C₁₈-Carbonsäuren oder deren Ester hergestellt. Ausgangsstoffe sind z. B. Tallölfettsäuren sowie die Öl - oder Linolensäure.

Nonandiamin, Decandiamin und Tridecandiamin beruhen ebenfalls auf natürlichen Rohstoffen, da sie aus den entsprechenden Dicarbonsäuren z. B. über die Dinitrilroute hergestellt werden.

Weitere Rohstoffe, beispielsweise gewonnen durch mikrobiologische Fermentation, befinden sich im industriellen Aufbau und können ebenfalls eingesetzt werden.

Das transparente Copolyamid (A) ist also besonders bevorzugt dadurch charakterisiert, dass es einen Bioanteil nach ASTM D6866-06a von mindestens 54 Gew.-% oder von mindestens 58 Gew.-% aufweist. Ganz besonders bevorzugt ist ein Bioanteil von mindestens 60 Gew.-% oder von mindestens 65 Gew.-%, insbesondere liegt er im Bereich von 50 bis 75 Gew.-%.

Damit die erfindungsgemäßen Polyamidformmassen die oben geforderten Eigenschaften besitzen, muss insbesondere die Konzentration an cycloaliphatischem Diamin in der Komponente (A) mindestens 40 Mol-%, bevorzugt mindestens 45 Mol-% und besonders bevorzugt mindestens 50 Mol-%, jeweils bezogen auf den Gesamtdiamingehalt, betragen. Somit werden cycloaliphatische Diamine in einem Konzentrationsbereich von 40 bis 90 Mol-%, bevorzugt im Bereich von 45 bis 85 Mol-% und besonders bevorzugt im Bereich 45 bis 68 Mol-%, bezogen auf den Gesamtdiamingehalt, eingesetzt. Die Konzentration an aliphatischem Diamin beträgt erfindungsgemäß immer mindestens 10 Mol-%, bevorzugt mindestens 15 Mol-% und besonders bevorzugt mindestens 32 Mol-%, bezogen auf den Gesamtdiamingehalt.

In einer erfindungsgemäßen Ausführungsform kann bevorzugt als Diamin eine Mischung aus 60 bis 90 Mol-% Bis-(4-amino-3-methyl-cyclohexyl)-methan (MACM) und/oder Bis-(4-amino-cyclohexyl)-methan (PACM) und 10 bis 40 Mol-% mindestens eines aliphatischen Diamins mit 9 bis 14 Kohlenstoffatomen, insbesondere Decandiamin, jeweils bezogen auf die Gesamtmenge an Diaminen, verwendet werden. Bevorzugt werden erfindungsgemäß die aliphatischen Diamine 1,9-Nonandiamin, 1,10-Decandiamin, 1,11-Undecandiamin, 1,12-Dodecandiamin, 1,13-Tridecandiamin oder 1,14-Tetradecandiamin eingesetzt, wobei besonders bevorzugt als aliphatisches Diamin 1,10-Decandiamin verwendet wird.

Die cycloaliphatischen Diamine werden aber erfindungsgemäß generell ausgewählt aus der Gruppe, bestehend aus Bis-(4-amino-cyclohexyl)-methan (PACM), 2,2-Bis-(4-aminocyclohexyl)-propan, Bis-(4-amino-3-methyl-cyclohexyl)-methan (MACM), 2,2-Bis-(4-amino-3-methyl-cyclohexyl)-propan, Isophorondiamin (5-Amino-1,3,3-trimethyl-cyclo-hexanmethanamin), 1,3-Diaminocyclo-hexan, 1,3-Diaminomethylcyclohexan, 2,5- bzw. 2,6-Bis-(aminomethyl)-norbornan (DN), 2,5- bzw. 2,6-Diaminonorbornan. Bevorzugt werden die cycloaliphatischen Diamine MACM und PACM, insbesondere MACM.

Der in dieser Anmeldung verwendete Ausdruck PACM steht für die ISO-Bezeichnung Bis-(4-amino-cyclohexyl)-methan, welches unter dem Handelnamen 4,4'-Diaminodicyclohexylmethan als Dicykan-Typ (CAS Nr. 1761-71-3) kommerziell erhältlich ist. Der Ausdruck MACM steht für die ISO-Bezeichnung Bis-(4-amino-3-methyl-cyclohexyl)-methan, welches unter dem Handelsnamen 3,3'-Dimethyl-4,4'-diaminodicyclohexylmethan als Laromin C260-Typ (CAS Nr. 6864-37-5) kommerziell erhältlich ist.

Im Sinne der vorliegenden Erfindung ist beabsichtigt, dass die Ausdrücke PACM bzw. MACM alle Trivialnamen, Handelsnamen oder andere dem Fachmann geläufige Namen einschließen, die den chemischen Strukturen der vorstehenden Verbindungen entsprechen.

Bevorzugt wird als aliphatische Disäure eine Säure, ausgewählt aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C₃₆-Dimerfettsäure und Gemischen daraus, wobei insbesondere die aliphatische Disäure zu mindestens 50 Mol-% aus Sebacinsäure, bezogen auf die Gesamtmenge an Disäuren, besteht, wobei besonders bevorzugt die aliphatische Disäure ausschließlich Sebacinsäure ist, eingesetzt.

Insbesondere ist das Copolyamid (A) gekennzeichnet durch Ketten mit der nachstehenden Formel I:

**(MACMX)ₓ/(10Y)_{y}/LC_{z}** (I),

worin bedeuten:
X, Y = aliphatische Dicarbonsäure(n) mit 9 bis 18 und 36 Kohlenstoffatomen,
x = 20 - 90 Mol-%,
y = 5 - 60 Mol-%,
10 = 1,10-Decandiamin
LC = Lactam(e) und/oder Aminocarbonsäure(n) mit 6 bis 12 Kohlenstoffatomen,
z = 0 - 50 Mol-%,
   wobei x + y + z = 100 Mol-% ist,
   und die Summe der Anteile X, 10Y und LC wenigstens 50 Gew.-% beträgt. Wenn X, Y und LC auf nachwachsenden Rohstoffen basieren, entspricht die Summe der Gew.-% X, 10Y und LC dem Bioanteil.

Als Komponente MACMX in Formel (I) werden amorphe Bausteine z. B. des Typs MACM9, MACM10, MACM 11, MACM12, MACM 13, MACM 14, MACM15, MACM16, MACM17, MACM18, MACM36 allein oder in Mischung eingesetzt. Die Dicarbonsäuren mit 9 bis 18 oder 36 Kohlenstoffatomen werden vorzugsweise aus erdölunabhängigen, nachwachsenden Rohstoffen hergestellt. Das Diamin MACM kann ganz oder teilweise durch PACM oder 2,6-Norbornandiamin oder 2,6-Bis-(aminomethyl)-norbornan oder 1,3-Cyclohexyldiamin oder 1,3-Bis-(aminomethyl)-cyclohexan, oder Isophorondiamin ersetzt sein. Bevorzugt wird MACM ganz oder teilweise durch PACM ersetzt.

Als Komponente 10Y in Formel (I) werden teilkristalline Bausteine z. B. des Typs PA 109, PA 1010, PA 1011, PA 1012, PA 1013, PA 1014, PA 1015, PA 1016, PA 1017, PA 1018, PA 1036 allein oder in Mischung eingesetzt. Bevorzugt werden diese Komponenten aus einem erdölunabhängigen, nachwachsendem Rohstoff hergestellt.

Erfindungsgemäß besonders bevorzugte Copolyamide (A) sind daher MACM9/109, MACM 10/1010, MACM12/1012 und MACM 14/1014.

Als Komponente LC werden in Formel (I) bevorzugt Lactam 11 und Lactam 12 sowie α,ω-Aminocarbonsäuren mit 10 bis 12 Kohlenstoffatomen oder Mischungen davon eingesetzt. Bevorzugt sind Lactame aus nachwachsenden Rohstoffen sowie Aminoundecansäure.

Das Copolyamid (A) weist eine Glasübergangstemperatur (T_{g}) von wenigstens 80°C, bevorzugt von wenigstens 85°C, insbesondere von wenigstens 90°C oder 100°C auf. Andererseits hat das Copolyamid (A) eine Glasübergangstemperatur (T_{g}) von höchstens 150°C, bevorzugt von höchstens 135°C und besonders bevorzugt von höchstens 125°C. Damit weist Komponente (A) eine bevorzugte Glasübergangstemperatur (T_{g}) im Bereich von 80 bis 135°C, insbesondere im Bereich von 85 bis 125°C auf.

Dieser T_{g}-Bereich wird in Kombination mit den cycloaliphatischen Systemen, wie z. B. MACM10 oder MACM12, erreicht, wenn ein genügend großer Anteil, wie dies zuvor für die Copolyamide (A) beschrieben wurde, durch aliphatische Anteile, wie z. B. PA 1010 oder PA 1012, ersetzt werden. Durch die erfindungsgemäße Reduktion der Glasübergangstemperatur (T_{g}), im Vergleich zu Homopolyamiden auf Basis cycloaliphatischer Diamine, wird erfindungsgemäß eine höhere Fliessfähigkeit der Polymerschmelze und damit eine bessere Verarbeitbarkeit erzielt. Da die erfindungsgemäßen Polyamidformmassen weniger rasch erstarren (als Homopolyamidformmassen) werden im Spritzguss durch Vermeiden von Fließlinien oder sonstigen Artefakten eine qualitativ bessere Oberfläche (glattere Oberfläche) und höhere Bindenahtfestigkeiten erreicht. Darüber hinaus lassen sich die erfindungsgemäßen Copolyamide schonender, also bei (10°C bis 30°C) tieferen Temperaturen herstellen und verarbeiten, so dass daraus gefertigte Formteile deutlich weniger Einschlüsse (von der Polykondensation herrührend) und Verfärbungen aufweisen, was insbesondere für transparente Werkstoffe und deren Anwendungen im optischen Bereich von herausragender Bedeutung ist.

Als Komponente (B) wird ein weiteres Polymer eingesetzt, das bevorzugt ein amorphes oder teilkristallines Polyamid oder Copolyamid gemäß der nachfolgenden Formel (II) ist:

**(MACMX)ₓ/(PACMY)_{y}/(MXDV)ᵥ/LC_{z}** (II),

wobei
X, Y, V = aliphatische Dicarbonsäure(n) mit 9 bis 18 und 36 Kohlenstoffatomen sowie Terephthalsäure (T) und Isophthalsäure (I), sowie Mischungen davon
x = 0 - 100 Gew.-%, y = 0 - 100 Gew.-%, v = 0 - 100 Gew.-%,
LC = Lactam(e) und/oder Aminocarbonsäure(n) mit 6 bis 12 Kohlenstoffatomen,
z = 0 - 100 Gew.-%,
v + x + y + z = 100 Gew.-%.

Bevorzugte Vertreter dieses Typs der Komponente (B) sind beispielsweise folgende Polyamide oder Copolyamide: MACM10, MACM12, MACM14, MACMI/12, MACMI/MACMT/12, MACMI/PACMT/12, PA11, PA12, wobei I für Isophthalsäure und T für Terephthalsäure steht.

Darüber hinaus kann das weitere Polymer (Komponente (B)) ausgewählt werden aus der Gruppe, bestehend aus Polyetheresteramiden, Polyetheramiden, Polyesteramiden oder deren Gemischen. Diese Copolymere können statistisch, alternierend oder blockweise aufgebaut sein. Der Polyamidanteil basiert dabei bevorzugt auf den Polyamiden PA6, PA66, PA69, PA610, PA612, PA99, PA1010, PA1012, PA1014, PA11, PA12 oder deren Mischungen. Bevorzugt sind die Polamidtypen PA1010, PA11 und PA12. Die Polyetherkomponenten dieser Copolymere basieren auf den Diolen oder Diaminen der Polyethylengykole und/oder Polypropylenglykole und/oder Polytetramethylengykole. Die Ester- oder Polyesterkomponenten beruhen auf Polyestern aliphatischer und/oder aromatischer Dicarbonsäuren mit aliphatischer Diolen, bevorzugt auf Dimerfettsäurediolen.

Die erfindungsgemäßen Polyamidformmassen enthalten bevorzugt:
55 bis 100 Gew.-% Komponente (A),
0 bis 45 Gew.-% Komponente (B),
0 bis 5 Gew.-% Komponente (C),

und besonders bevorzugt:
65 bis 90 Gew.-% Komponente (A),
10 bis 35 Gew.-% Komponente (B),
0 bis 5 Gew.-% Komponente (C).

Die erfindungsgemäßen Polyamidformmassen können aber die üblichen Additive (Komponente C) in den üblicherweise geringen Anteilen (weniger als 10 Gew.-%, bevorzugtermaßen weniger als 5 Gew.-%, insbesondere bevorzugt weniger als 3 Gew.-%) aufweisen. Bei den genannten Additiven kann es sich um Stabilisatoren wie UV-Stabilisatoren, Hitzestabilisatoren, Radikalfänger und/oder um Verarbeitungshilfsstoffe, Einschlussverhinderer, Gleitmittel, Entformungshilfsstoffe, Weichmacher und/oder um funktionelle Additive bevorzugt zur Beeinflussung optischer Eigenschaften wie insbesondere des Brechungsindexes oder um Kombinationen oder Mischungen davon handeln. Desweiteren können die Formmassen (als Komponente C) nanoskalige Füll- und/oder Funktionsstoffe, wie z. B. Schichtmineralien oder Metalloxide, die den Brechungsindex erhöhen, oder optische Aufheller oder Farbstoffe, wie z. B. photochrome Farbstoffe beinhalten.

Im Sinne der Erfindung können die Formmassen außerdem dem Fachmann geläufige Füllund/oder Zuschlagstoffe, beispielsweise Glasfasern, Glaskugeln, Carbonfasern, Russ, Graphit, Flammschutzmittel, Mineral wie zum Beispiel Titandioxid, Calciumcarbonat oder Bariumsulfat, oder beispielsweise Schlagzähmodifikatoren, wie funktionalisierte Polyolefine, enthalten.

Bevorzugte Schlagzähmodifikatoren stammen aus der Gruppe, ausgewählt aus säuremodifizierten Ethylen-α-Olefin-Copolymeren, Ethylen-Glycidylmethacrylsäure-Copolymeren und Methacrylat-Butadien-Styrol-Copolymeren.

Den erfindungsgemäßen Formmassen können aber auch Füll- oder Verstärkungsmittel zugegeben werden. In diesem Fall sind die aus den Formmassen hergestellten Formteile natürlich nicht transparent. Neben Glas- und Kohlenstofffasern können als Verstärkungsmittel besonders solche auf Basis von nachwachsenden Rohstoffen und Bioanteilen über 50% eingesetzt werden. Besonders bevorzugt werden Naturfasern, wie z. B. Cellulose-, Hanf-, Flachs-, Baumwoll-, Woll- oder Holzfasern eingesetzt.

Die Herstellung der Polymerkomponenten (A) und (B) erfolgt in bekannten Druckgefäßen. Zunächst wird eine Druckphase bei 250°C bis 320°C gefahren. Danach folgt die Entspannung bei 250°C bis 320°C. Die Entgasung wird bei 260°C bis 320°C durchgeführt. Anschließend wird die Polyamidformmasse in Strangform ausgetragen, im Wasserbad auf 5°C bis 80°C gekühlt und granuliert. Das Granulat wird 12h bei 80°C auf einen Wassergehalt unter 0,06% getrocknet. Während der Trocknung mit gleichzeitiger Umwälzung des Granulates können Additive wie Gleitmittel, Farbstoffe, Stabilisatoren oder andere auf das Granulat aufgetragen oder aufgesintert werden.

Zur Einstellung der gewünschten relativen Viskosität (Komponenten (A), (B)), gemessen in 0,5 gew.-%iger m-Kresollösung, von 1,45 bis 2,30, bevorzugt 1,55 bis 2,00 und insbesondere bevorzugt von 1,60 bis 1,90 können entweder das Diamin oder die Dicarbonsäuren in geringem Überschuss von 0,01 bis 2 Mol-% eingesetzt werden. Bevorzugt wird die Regelung mit Monoamin oder Monocarbonsäuren von 0,01 bis 2,0 Gew.-%, bevorzugt 0,05 bis 0,5 Gew.-% durchgeführt. Geeignete Regler sind Benzoesäure, Essigsäure, Propionsäure, Stearylamin oder deren Mischungen. Besonders bevorzugt sind Regler mit Amin- oder Carbonsäuregruppen, die zusätzlich Stabilisatorgruppen des Typs HALS oder des Typs tert-Butyl-Phenol enthalten, wie beispielsweise Triacetondiamin oder Isophthalsäure-Di-Triacetondiamin-Derivate.

Geeignete Katalysatoren zur Beschleunigung der Polykondensationsreaktion sind phosphorhaltige Säuren, wie beispielsweise H₃PO₂, H₃PO₃, H₃PO₄, deren Salze oder organischen Derivate, die gleichzeitig eine Reduzierung der Verfärbung während der Verarbeitung bewirken. Die Katalysatoren werden im Bereich von 0,01 bis 0,5 Gew.-%, bevorzugt im Bereich von 0,03 bis 0,1 Gew.-% zugegeben. Geeignete Entschäumer zur Vermeidung der Schaumbildung während der Entgasung sind wässrige Emulsionen, die Silicone oder Siliconderivate im Bereich von 0,01 bis 1,0 Gew.%, bevorzugt im Bereich von 0,01 bis 0,10 bei 10%iger Emulsion enthalten.

Geeignete Hitze- oder UV-Stabilisatoren können bereits vor der Polykondensation dem Ansatz in Mengen von 0,01 bis 0,5 Gew.-% zugegeben werden. Bevorzugt werden hochschmelzende Typen eingesetzt. Besonders bevorzugt wird Irganox 1098 verwendet.

Die Ausrüstung der erfindungsgemäßen, transparenten Formmassen mit Additiven wie beispielsweise Stabilisatoren, Gleitmittel wie beispielsweise Paraffinöle oder Stearate, Farbstoffe, Füllstoffe, Schlagzähmodifikatoren wie beispielsweise Terpolymere aus Ethylen-Glycidyl-Methacrylat, bevorzugt mit einem Brechungsindex im Bereich der erfindungsgemäßen Formmassen oder Maleinsäureanhydrid gepfropfte Polyethylene, Propylene oder Verstärkungsstoffe wie beispielsweise transparent dispergierbare Nano-Partikel oder Glaskugeln oder Glasfasern, oder Mischungen der Additive, kann durch nachfolgende bekannte Mischverfahren, insbesondere Extrusion auf Ein- oder Mehrwellenextrudern mit Massetemperaturen zwischen 250°C bis 350°C, erfolgen.

Geeignete Verfahren zur Herstellung hochtransparenter Formteile aus den erfindungsgemäßen, transparenten Polyamidformmassen sind Spritzgießverfahren oder Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt. Besonders geeignete Verfahren zur Herstellung von fehlerfreien, spannungsarmen Oberflächen des Formteils aus den erfindungsgemäßen, transparenten Polyamidformmassen, wie beispielsweise Linsen für Brillen oder hochwertige Gehäuseteile, ist ein Expansionsspritzprägeprozess, wobei Kavitäten mit Wandstärken von 1 bis 5mm gefüllt werden und anschließend die Werkzeugkavität bei permanenter Füllung auf höhere Wandstärken auseinander gefahren wird.

Geeignete Verfahren zur Herstellung von Folien, Rohren und Halbzeugen in Ein- oder Mehrschichtausführung aus den erfindungsgemäßen, transparenten Polyamidformmassen sind Extrusionsverfahren auf Ein- oder Mehrwellenextrudern mit Massetemperaturen zwischen 250°C bis 350°C, wobei je nach Verträglichkeit der verschiedenen Schichten geeignete Haftvermittler in Form entsprechender Copolymere oder Blends eingesetzt werden können.

Formteile, die aus den erfindungsgemäßen Polyamidformmassen aufgebaut sind, können miteinander nach üblichen Verfahren wie beispielsweise durch Ultraschallschweißen, Glühdrahtschweißen, Friktionsschweißen, Rotationsschweißen oder Laserschweißen durch Ausrüstung mit laseraktiven Farbstoffen mit Absorption im Bereich 800nm bis 2000nm, miteinander verbunden werden.

Geeignete Verfahren zur Herstellung von Hohlkörpern und Flaschen in Ein- oder Mehrschichtausführung aus den erfindungsgemäßen, transparenten Polyamidformmassen sind Spritzblasverfahren, Spritzstreckblasverfahren und Extrusionsblasverfahren.

Die erfindungsgemäßen Formmassen können auch zu Folien, wie z. B. Flachfolien, Blasfolien, Gießfolien, Mehrschichtfolien verarbeitet werden. Eine Weiterverarbeitung der Folien erfolgt bevorzugt durch Kaschieren, Hinterspritzen, Recken, Verstrecken, Bedrucken oder Färben.

Formteile können massegefärbt oder mittels sogenannter Tauchbäder nachträglich eingefärbt werden. Formteile werden gegebenenfalls durch Fräsen, Bohren, Schleifen, Lasermarkieren, -schneiden und/oder -schweißen bearbeitet.

Geeignete Verwendungen für Formteile, die aus den erfindungsgemäßen, transparenten Polyamidformmassen aufgebaut sind, sind Schaugläser für Heizungstechnik mit direktem Ölkontakt, Filtertassen für Trinkwasseraufbereitung, Babyflaschen, Flaschen für Carbonisierung, Essgeschirr, Durchflussmesser für Gase oder flüssige Medien, Uhrengehäuse, Gehäuse für Armbanduhren, Lampengehäuse und Reflektoren für Autolampen.

Die Erfindung wird nun näher durch die folgenden Beispiele erläutert, ohne sie jedoch darauf zu beschränken.

### Beispiele

Die Herstellung der erfindungsgemäßen Polyamidformmasse erfolgt in bekannten Versuchs-Druckautoklaven mit 130 L Volumen. Zunächst wird eine Druckphase bei 290°C gefahren. Danach folgt die Entspannung bei 280°C. Die Entgasung wird bei 280°C durchgeführt. Anschließend wird die Polyamidformmasse in Strangform ausgetragen, im Wasserbad gekühlt und granuliert. Das Granulat wird 12h bei 80°C auf einen Wassergehalt unter 0,06% getrocknet. Die Herstellung hochtransparenter Formteile bzw. Probekörper aus den erfindungsgemäßen, transparenten Polyamidformmassen wurde auf einer Arburg 420C Allrounder 1000-250 Spritzgießmaschine bei Massetemperaturen von 250°C bis 280°C durchgeführt, wobei das Werkzeug auf die Temperatur von 60°C eingestellt wurde. Die Schneckendrehzahl betrug 150 bis 400 Upm.

Die entstandenen Materialien bzw. Formteile weisen die in Tabelle 1 und 2 aufgeführten Kenndaten auf.

**Tabelle 1**

| | Einheit | **B1** | **B2** | **B3** | **VB1** |
|---|---|---|---|---|---|
| **Zusammensetzung** | | | | | |
| Polyamid (gemäß ISO 1874) | | MACM10/1010 (66:34) | MACM12/1012 (66:34) | MACM10/1010 (60:40) | 101/1010 (50:50) |
| MACM | mol-% | 33 | 33 | 30 | |
| Isophthalsäure | mol-% | 0 | 0 | 0 | 25 |
| 1,10-Decandiamin | mol-% | 17 | 17 | 20 | 50 |
| Sebacinsäure | mol-% | 50 | 0 | 50 | 25 |
| Dodecandisäure | mol-% | 0 | 50 | 0 | 0 |
| Bioanteil gemäß ASTM D6866-06a | % | 59 | 62 | 62,5 | 80 |

| **Eigenschaften** | | | | | |
|---|---|---|---|---|---|
| MVR (275°C/5kg) | ccm/ 10min | 85 | 52 | 72 | 42 |
| Glasübergangstemperatur (T_{g}) | °C | 115 | 110 | 113 | 59 |
| Schmelztemperatur | °C | - | - | - | - |
| Schmelzwärme | J/g | < 5 | < 5 | < 5 | < 5 |
| Relative Viskosität | | 1,80 | 1,85 | 1,80 | 1,95 |
| Zug-E-Modul | MPa | 1'700 | 1650 | 1700 | 1630 |
| Reissfestigkeit | MPa | 65 | 60 | 63 | 57 |
| Reissdehnung | % | 180 | 170 | 190 | 210 |
| Schlagzähigkeit Charpy 23°C | kJ/m² | ohne Bruch | ohne Bruch | ohne Bruch | 120 |
| Schlagzähigkeit Charpy -30°C | kJ/m² | ohne Bruch | ohne Bruch | ohne Bruch | 90 |
| Kerbschlagzähigkeit Charpy 23°C | kJ/m² | 7 | 9 | 7 | 5 |
| Deformation im Klimatest 55°C/95% rF/168h | mm/ 100mm | 0,6 | 0,9 | 1,2 | > 10 |
| Wasseraufnahme 23°C/ 50% relative Feuchte | % | 1,1 | n.b. | n.b. | n.b. |
| Lichttransmission nach ASTM D1003 | % | 93 | 93 | 93 | 93 |
| Haze nach ASTM D1003 | % | 2,3 | 7,2 | 4,5 | 1,2 |
| Gloss 20° | % | 148 | 140 | 145 | 160 |
| Gloss 60° | % | 145 | 135 | 140 | 150 |

**Tabelle 2**

| | Einheit | **B4** | **B5** | **B6** | **B7** |
|---|---|---|---|---|---|
| **Zusammensetzung** | | | | | |
| Polyamid (gemäss ISO 1874) | - | MACM10/1010 (56:44) | MACM10/1010 (50:50) | MACM10/1010 (46:54) | PACM10/1010 (50:50) |
| MACM | mol-% | 28 | 25 | 23 | 0 |
| PACM | mol% | 0 | 0 | 0 | 25 |
| 1,10-Decandiamin | mol% | 22 | 25 | 27 | 25 |
| Sebacinsäure | mol% | 50 | 50 | 50 | 50 |
| Bioanteil gemäss ASTM D6866-06a | % | 65 | 68 | 70,5 | 62 |

| **Eigenschaften** | | | | | |
|---|---|---|---|---|---|
| MVR (275°C/5kg) | ccm/ 10min | 55 | 53 | 80 | n.b. |
| Glasübergangstemperatur (T_{g}) | °C | 104 | 96 | 89 | 84 |
| Schmelzpunkt | °C | | | | 172 |
| Schmelzwärme | J/g | < 5 | < 5 | < 5 | 43 |
| Relative Viskosität | | 1,84 | 1,86 | 1,78 | 1,82 |
| Zug-E-Modul | MPa | 1680 | 1670 | 1650 | 1610 |
| Reissfestigkeit | MPa | 60 | 60 | 58 | 58 |
| Reissdehnung | % | 190 | 200 | 120 | 230 |
| Schlagzähigkeit Charpy 23°C | kJ/m² | ohne Bruch | ohne Bruch | ohne Bruch | ohne Bruch |
| Schlagzähigkeit Charpy -30°C | kJ/m² | ohne Bruch | ohne Bruch | ohne Bruch | ohne Bruch |
| Kerbschlagzähigkeit Charpy 23°C | kJ/m² | 7 | 7 | 6 | 7 |
| Deformation im Klimatest 55°C/95% rF/168h | mm/ 100mm | 1,9 | 3,6 | 7,8 | 4,5 |
| Wasseraufnahme 23°C/ 50% relative Feuchte | % | 1,0 | 1,0 | 0,99 | n.b. |
| Lichttransmission nach ASTM D1003 | % | 93 | 93 | 93 | 93 |
| Haze nach ASTM D 1003 | % | 2,3 | 3,1 | 1,0 | 1,4 |
| Gloss 20° | % | 145 | 140 | 150 | 153 |
| Gloss 60° | % | 140 | 135 | 148 | 145 |

| | | | | | |
|---|---|---|---|---|---|
| n.b.: nicht bestimmt | | | | | |

Die transparenten Homopolyamide MACM10 und MACM12 haben eine Glasübergangstemperatur von 165°C bzw. 155°C und eine Schmelzviskosität im Bereich von 15 - 22 cm³/10min (MVR, 275°C/5kg) bei einer Lösungsviskosität (relative Viskosität) im Bereich von 1,85 bis 1,80. Somit besitzen die erfindungsgemäßen Copolyamide im Vergleich zu den bekannten Homopolyamiden eine signifikant niedrigere Schmelzviskosität bei gleicher relativer Viskosität und lassen sich somit leichter verarbeiten.

Durch den aliphatischen Anteil im erfindungsgemäßen Copolyamid (Beispiel 1 und 4 - 6) konnte die Wasseraufnahme gegenüber dem transparentem Homopolyamid MACM10, die bei 23°C und 50% relativer Feuchte 1,20% beträgt, nochmals reduziert werden.

Die relative Viskosität (ηᵣₑₗ) wurde bestimmt nach DIN EN ISO 307, in 0,5 gew.-%iger m-Kresollösung bei einer Temperatur von 20°C.

Die Glasumwandlungstemperatur (T_{g}), der Schmelzpunkt (Tₘ) und die Schmelzwärme (Hₘ) wurden bestimmt nach ISO 11357-1/2. Die Differential scanning calorimetry (DSC) wurde mit einer Aufheizrate von 20K/min durchgeführt.

Zug-E-Modul, Reissfestigkeit und Reissdehnung wurden nach ISO 527 mit einer Zuggeschwindigkeit von 1mm/min (Zug-E-Modul) bzw. 50mm/min (Reissfestigkeit, Reissdehnung) am ISO-Zugstab , Norm: ISO/CD 3167, Typ Al, 170 x 20/10 x 4mm bei Temperatur 23°C bestimmt.

Schlagzähigkeit und Kerbschlagzähigkeit nach Charpy wurden nach ISO 179/keU am ISO-Prüfstab, Norm: ISO/CD 3167, Typ B1, 80 x 10 x 4mm bei einer Temperatur von -30°C und 23°C gemessen.

Lichttransmission (Transparenz) und Haze wurden nach ASTM D 1003 an Platten der Dimension 2 x 60 x 60mm oder an Rundplatten 2 x 70mm bei einer Temperatur von 23°C mit dem Messgerät Haze Gard Plus der Firma Byk Gardner mit der CIE Lichtart C bestimmt. Die Lichttransmissionswerte werden in % der eingestrahlten Lichtmenge angegeben.

Der Glanz wurde nach DIN EN ISO 2813 an einer Rundplatte der Dimension 70 x 2mm bei einer Temperatur von 23°C mit einem Minolta Multi Gloss 268 unter einem Winkel von 20° und 60°gemessen.

Im Klima-Test wurde die Durchbiegung einer Platte der Dimension 100 x 100 x 2mm unter Eigenlast bei einer Temperatur von 55°C und einer relativen Feuchte von 95% bestimmt. Hierzu wurde die Platte an einer Kante um 25mm angehoben und die Durchbiegung in der Mitte (Lageänderung gegenüber dem Ausgangszustand) der Platte nach 168h gemessen.

Der MVR (Melt Volume Rate) wurde nach ISO 1133 bei 275°C und einer Belastung von 5 kg bestimmt.

## Patentansprüche

1. Polyamidformmassen auf Basis von transparenten Copolyamiden zur Herstellung von transparenten oder einfärbbaren Formteilen mit hoher Zähigkeit, niedriger Wasseraufnahme und geringem Verzug im Klimatest, enthaltend
(A) 40 bis 100 Gew.-% mindestens eines transparenten Copolyamids mit einer Glasübergangstemperatur (T_{g}) von wenigstens 80°C und höchstens 150°C, aufgebaut aus
- mindestens zwei voneinander verschiedenen Diaminen, ausgewählt aus der Gruppe, bestehend aus aliphatischen und cycloaliphatischen Diaminen, insbesondere mit 6 bis 36 Kohlenstoffatomen,
wobei die Konzentration an cycloaliphatischem Diamin mindestens 40 Mol-% und die Konzentration an aliphatischem Diamin mindestens 10 Mol-%, jeweils bezogen auf den Gesamtdiamingehalt, beträgt, sowie
- aus einer oder mehreren aliphatischen Dicarbonsäuren, insbesondere mit 6 bis 36 Kohlenstoffatomen,
(B) 0 bis 60 Gew.-% mindestens eines weiteren Polymeren, ausgewählt aus der Gruppe, bestehend aus amorphen oder teilkristallinen Homo- oder Copolyamiden, Polyetheresteramiden, Polyetheramiden, Polyesteramiden oder deren Gemischen,
(C) 0 bis 10 Gew.-% übliche Additive, ausgewählt aus der Gruppe, bestehend aus UV-Stabilisatoren, Hitzestabilisatoren, Radikalfängern und/oder Verarbeitungshilfsstoffen, Einschlussverhinderern, Gleitmitteln, Entformungshilfsstoffen, Weichmachern, funktionellen Additiven zur Beeinflussung der optischen Eigenschaften, insbesondere des Brechungsindexes, Schlagzähmodifikatoren, nanoskaligen Füll- und/oder Zuschlagsstoffen, optischen Aufhellern, Farbstoffen oder Mischungen davon,
wobei die Summe der Komponenten (A), (B) und (C) 100 Gew.-% ergibt.

2. Polyamidformmassen auf Basis von transparenten Copolyamiden gemäß Anspruch 1, **dadurch gekennzeichnet, dass** die Copolyamide überwiegend auf Monomeren basieren, die aus nachwachsenden oder erneuerbaren Rohstoffen zugänglich sind und
wobei der Bioanteil nach ASTM D6866-068a von Copolyamid (A) und/oder der weiteren Komponente (B) mindestens 50 Gew.-%, insbesondere zwischen 50 und 75 Gew.-% beträgt.

3. Polyamidformmassen gemäß einem der Ansprüche 1 oder 2, **dadurch gekennzeichnet, dass** die Konzentration an cycloaliphatischem Diamin in der Komponente (A) mindestens 45 Mol-% und bevorzugt mindestens 50 Mol-%, jeweils bezogen auf den Gesamtdiamingehalt, beträgt, und wobei ganz besonders bevorzugt die cycloaliphatischen Diamine in einem Konzentrationsbereich von 45 bis 85 Mol-%, insbesondere im Bereich von 45 bis 68 Mol-%, bezogen auf den Gesamtdiamingehalt, eingesetzt werden.

4. Polyamidformmassen gemäß einem der Ansprüche 1 oder 2, **dadurch gekennzeichnet, dass** für das transparente Copolyamid (A) als Diamin-Ausgangskomponente eine Mischung aus 60 bis 90 Mol-% Bis-(4-amino-3-methyl-cyclohexyl)-methan (MACM) und/oder Bis-(4-amino-cyclohexyl)-methan (PACM) und 10 bis 40 Mol-% aliphatisches Diamin mit 9 bis 14 Kohlenstoffatomen, insbesondere Decandiamin, jeweils bezogen auf die Gesamtmenge an Diaminen, verwendet wird.

5. Polyamidformmassen gemäß einem der Ansprüche 1 bis 4, **dadurch gekennzeichnet, dass** die aliphatische Disäure ausgewählt ist aus der Gruppe, bestehend aus Azelainsäure, Sebacinsäure, Undecandisäure, Dodecandisäure, Tridecandisäure, Tetradecandisäure, Pentadecandisäure, Hexadecandisäure, Heptadecandisäure, Oktadecandisäure, C₃₆-Dimerfettsäure und Gemischen davon, wobei insbesondere die aliphatische Disäure zu mindestens 50 Mol-% aus Sebacinsäure, bezogen auf die Gesamtmenge an Disäuren, besteht, und wobei besonders bevorzugt die aliphatische Disäure ausschließlich Sebacinsäure ist.

6. Polyamidformmassen gemäß einem oder mehreren der vorhergehenden Ansprüche 1 bis 5, wobei das Copolyamid (A) **gekennzeichnet ist durch** Ketten mit der nachstehenden Formel (I):
**(MACMX)ₓ/(10Y)_{y}/LC_{z}** (I),
worin bedeuten:
X, Y = aliphatische Dicarbonsäure(n) mit 9 bis 18 und 36 Kohlenstoffatomen,
x = 20 - 90 Mol-%,
y = 5 - 60 Mol-%,
LC = Lactam(e) und/oder Aminocarbonsäure(n) mit 6 bis 12 Kohlenstoffatomen,
z = 0 - 50 Mol-%,
wobei x + y + z= 100 Mol-% ist,
und die Summe der Anteile X, 10Y und LC wenigstens 50 Gew.-% beträgt.

7. Polyamidformmassen gemäß Anspruch 6, **dadurch gekennzeichnet, dass** als Komponente MACMX in Formel (I) amorphe Bausteine aus der Gruppe, bestehend aus MACM9, MACM10, MACM11, MACM12, MACM13, MACM14, MACM15, MACM16, MACM17, MACM18, MACM36 oder deren Gemische eingesetzt werden,
wobei das Diamin MACM ganz oder teilweise durch PACM oder Norbornandiamin oder 1,3-Cyclohexyldiamin ersetzt sein kann.

8. Polyamidformmassen gemäß Anspruch 6, **dadurch gekennzeichnet, dass** als Komponente 10Y in Formel (I) teilkristalline Bausteine des Typs aus der Gruppe PA 109, PA 1010, PA 1011, PA 1012, PA 1013, PA 1014, PA 1015, PA 1016, PA 1017, PA 1018, PA 1036 allein oder in Mischung eingesetzt werden.

9. Polyamidformmassen gemäß Anspruch 6, **dadurch gekennzeichnet, dass** in der Formel (I) die Komponente LC ausgewählt ist aus Lactam 11, Lactam 12 sowie α,ω-Aminocarbonsäuren mit 10 bis 12 Kohlenstoffatomen oder Mischungen davon.

10. Polyamidformmassen gemäß einem oder mehreren der Ansprüche 1 bis 9, **dadurch gekennzeichnet, dass** das Copolyamid (A) eine Glasübergangstemperatur von wenigstens 85°C, insbesondere von wenigstens 90°C, besonders bevorzugt von wenigstens 100°C, aufweist.

11. Polyamidformmassen gemäß einem oder mehreren der Ansprüche 1 bis 10, **dadurch gekennzeichnet, dass** das Copolyamid (A) ausgewählt ist aus der Gruppe, bestehend aus MACM9/109, MACM10/1010, MACM12/1012 und MACM14/1014.

12. Polyamidformmassen gemäß einem der vorhergehenden Ansprüche 1 bis 11, **dadurch gekennzeichnet, dass** die Polyamidformmasse ein Blend aus Komponente (A) mit einem zweiten Polymer (Komponente (B)) enthält und als Komponente (B) ein Polymer eingesetzt wird, das ein amorphes oder teilkristallines Polyamid oder Copolyamid ist, charakterisiert durch Ketten mit der nachstehenden Formel (II):
**(MACMX)ₓ/(PACMY)_{y}/(MXDV)ᵥ/LC_{z}** (II),
worin bedeuten:
X, Y, V = aliphatische Dicarbonsäure(n) mit 9 bis 18 und 36 Kohlenstoffatomen sowie Terephthalsäure (T) und Isophthalsäure (I), sowie Mischungen davon
x = 0 - 100 Gew.-%, y = 0 - 100 Gew.-%, v = 0 - 100 Gew.-%,
LC = Lactam(e) und/oder Aminocarbonsäure(n) mit 6 bis 12 Kohlenstoffatomen,
z = 0 - 100 Gew.-%,
v + x + y + z = 100 Gew.-%.

13. Verfahren zur Herstellung der Polyamidformmassen gemäß einem der Ansprüche 1 bis 12, **dadurch gekennzeichnet, dass** die Herstellung der Polymerkomponenten (A) und (B) in bekannten Druckgefäßen erfolgt, mit einer Druckphase bei 250°C bis 320°C mit einer nachfolgenden Entspannung bei 250°C bis 320°C, mit einer nachfolgenden Entgasung bei 260°C bis 320°C sowie Austragen der Polyamidformmassen in Strangform, Abkühlen, Granulieren und Trocknen des Granulats, Compoundieren der Komponenten (A), und gegebenenfalls (B), und gegebenenfalls (C) als Granulat und Formen in einem Extruder bei Massetemperaturen von 220°C bis 350°C zu einem Strang, Schneiden mit geeigneten Granulatoren zu Pellets, wobei während der Compoundierung Additive zugegeben werden können, die zur Ausrüstung der Formmasse erwünscht sind, wie Verarbeitungsstabilisatoren, Farbpigmente, UV-Absorber, Hitzestabilisatoren, Flammschutzmittel und andere transparente Polyamide oder Polyamid 12.

14. Formteil, erhältlich aus den Polyamidformmassen gemäß einem der Ansprüche 1 bis 12 mittels Spritzgießverfahren und Spritzprägeverfahren bei Massetemperaturen von 230°C bis 320°C, wobei das Werkzeug mit Temperaturen von 40°C bis 130°C eingestellt wird und wobei gegebenenfalls das Werkzeug mit Temperaturen von 40°C bis 130°C nach dem Füllen der Kavität einen Prägedruck auf das heiße Formteil aufbringt.

15. Formteil gemäß Anspruch 14, **gekennzeichnet durch** eine Lichttransmission, gemessen nach ASTM D 1003, einer aus der Formmasse nach den Ansprüchen 1 bis 12 hergestellten Platte mit einer Dicke von 2mm, welche wenigstens 85%, bevorzugt wenigstens 88% und besonders bevorzugt wenigstens 90% beträgt.

16. Formteil gemäß einem der hervorgehenden Ansprüche, **gekennzeichnet durch** eine Trübung (Haze), gemessen nach ASTM D1003, einer aus der transparenten Polyamidformmasse nach den Ansprüchen 1 bis 12 hergestellten Platte mit einer Dicke von 2mm von höchstens 10%, bevorzugt von höchstens 5% und ganz besonders bevorzugt von höchstens 3%.

17. Formteil gemäß einem der vorhergehenden Ansprüche, hergestellt aus einer Formmasse gemäß einem der Ansprüche 1 bis 12, **gekennzeichnet durch** eine Deformation im Klimatest von kleiner 8, bevorzugt von kleiner 5, insbesondere bevorzugt von kleiner 3.
